# EUROPEAN PATENT APPLICATION

(11) **EP 4 036 726 A1**
(43) Date of publication of application: **03.08.2022**
(21) Application number: 22153727.7
(22) Date of filing: 27.01.2022
(51) Int. Cl.: G06F 9/50

(54) **METHOD AND SYSTEM FOR OPTIMIZING PLACEMENT OF SOFTWARE COMPONENTS OF A CLOUD SERVICE**

(30) Priority: 27.01.2021 SE 2150087
(71) Applicant: Arctos Labs Scandinavia AB, 972 35 Luleå (SE)
(72) Inventor: Lundbäck, Bengt Arne, 976 31 Luleå (SE); Björklund, Hans Martin, 903 60 Umeå (SE); Sundberg, Erik Mikael, 973 41 Luleå (SE); Rynbäck, Patrik Johan Erik, 982 05 Puoltikasvaara (SE); Magnusson, Lars-Göran, 973 41 Luleå (SE); Mats Erland, Eriksson, 961 93 Boden (SE)
(74) Representative: Bergenstråhle & Partners AB

(57) **Abstract**

A method and system for optimizing placement of a plurality of software components of cloud services in a cloud computing network, generates a service deployment model with a placement optimization description described as constrained optimization problem, by matching service constraints to infrastructure capacity in combination with optimization criterium, thus enable the method and system to deploy new services and/or redeploy existing services in a profitable, efficient and flexible way.

## Description

### Technical field

The present invention relates generally to handling of cloud services in a cloud computing network, and more particularly to a method and system for optimizing placement of software components of a cloud service onto a network of data centers in a cloud-computing network.

### Background art

Cloud computing is a service of sharing IT resources, e.g. computing, databases, storage, etc. as well as networking thereby combining private and public computing locations. It is also the on-demand availability of IT resources without direct active management by the user and usually implemented by data centers available to many users over the Internet. Data centers herein means infrastructure having computing and storage capacities. Large clouds, predominant today, often have functions distributed over multiple locations from central servers. Cloud computing relies on sharing of resources to achieve coherence and economies of scale. If the connection to the user is relatively close, it may be designated an edge data center.

Edge computing which brings computation and data storage closer to the location where it is needed has significantly improved response time of services and saved the bandwidth. Modern edge computing significantly extends this approach through virtualization and/or container technology that makes it easier to deploy and run a wider range of applications on the edge data centers.

The applications deployed in the cloud herein can be called cloud services. Cloud service is some functionality or set of functionalities, providing some value to, and consumed by, users or software systems. A cloud service comprises of at least one, but typically several, software components. The software components can be deployed to different compute resources in a cloud computing network. Some software components may belong/contribute to more than one cloud service instance. There may be several cloud services instances of a cloud service running at the same time within the cloud computing network, thereby providing the same set of functionalities, typically to a plurality of users/other systems. The software component mentioned above is a piece of software that can be separately identified, at least within the scope of the data communication network and the cloud computing network environments. The software component can also be deployed and undeployed on the resource infrastructure, e.g., could computing network, separately. The software component can further be configured, upgraded and downgraded separately. Furthermore, the software component has the capability to interact with other software components and/or other systems/users, using some communication mechanism(s). A software component contributes thus to a particular part of the complete cloud service functionality. A deployed software component instance may also, depending on its implementation, simultaneously belong/contribute to more than one cloud service instance. Such a software component is called a shareable or shared software component. Whether a sharable software component instance will participate in multiple cloud services is subject to decision by a placement optimization system. When the cloud service is deployed on the data centers, it is indeed the software components comprised in the cloud service placed onto different data centers. The deployed software components are called component instances and the deployed services are called service instances herein. A cloud service instance is an identifiable and manageable entity, comprising a set of deployed software component instances which are configured to cooperate, and which provides some useful data processing service to some user or to some other system, within or external to the cloud computing network.

There may be cloud service constraints when deploying the software components on the data centers. Matching cloud service constraints to available infrastructure is important when deploying services. Utilization and resource availability are usually considered. However, as applications are increasingly micro services, the individual software components need to be carefully placed to achieve high utilization and resulting economics, whilst at the same time deliver the performance needed, thus it is highly critical to distribute workload over the cloud to the edge continuum, from the centralized cloud all the way down to the network of edge locations in an optimal way, thus to meet cloud service requirements and at the same time to achieve both high utilization and profitability.

Since there are many factors or parameters affecting the optimization of component deployment, only considering utilization and resource availability is not enough for an optimal deployment of the component, more factors or parameters should also be taken into consideration.

In another aspect, most solutions can only optimize placement of one cloud service at a time. This leads to fragmentation and a non-optimal placement over time as the end result depends on the order of arrival for the placement requests.

Furthermore, in prior art, the component deployment is usually solved by algorithms addressing only specific optimization scenarios with limitations in their input parameters. The disadvantage of these solutions is that complexity and efficiency vary and depends much on the type of algorithm. With the appearance and rapid increase of disaggregated applications, using microservices, over a heterogenous infrastructure, varied and more dynamic data needs to be dealt by the algorithm, which reduces the efficiency of the computation, thus it is necessary to develop an easier and more efficient solution to optimize the component deployment.

### Summary of invention

An objective of the present invention is to provide a computer-implemented method and system for optimizing placement of a plurality of software components of cloud services in a cloud computing network.

Another objective of the present invention is to provide a computer program comprising instructions, which, when executed by at least one processing circuitry of a system of a data communication network, causes the system to perform steps of the above method.

The above objectives are wholly or partially met by the method and system described in the appended claims. Features and different aspects are set forth in the appended claims, in the following description, and in the annexed drawings.

According to one aspect, a method is provided for optimizing placement of a plurality of software components of a cloud service in a cloud computing network, wherein the cloud-computing network comprises a plurality of data centers having computing and storage capacities, the method comprises: receiving a service placement request from an external system, obtaining an optimization criterium and one or more entries from the service placement request, wherein each entry is relating to a new service to be deployed or an already existing service, and each entry comprises entry information comprising a service descriptor identifier, wherein the service descriptor identifier is related to the new service to be deployed or the already existing service, obtaining a service descriptor according to the service descriptor identifier, wherein the service descriptor comprises service properties of the new service to be deployed or the already existing service, the plurality of software components and interconnection between the plurality of software components, obtaining static and dynamic information in the cloud-computing network based on the entry information, wherein the static and dynamic information comprises resource availability and metrics, creating a placement optimization description for the placement of the software components onto at least one of the plurality of data centers based on one or more placement constraints, the obtained static and dynamic information and the optimization criterium, computing an optimal placement of the software components onto at least one of the plurality of data centers based on the placement optimization description, by matching and satisfying the placement constraints to the static and dynamic information of the cloud-computing network in combination with the optimization criterium, generating a service deployment model based on the placement optimization computation result, and providing the service deployment model to the external system.

In another embodiment, the entry information of each entry further comprises one service instance identifier, the service instance identifier is relating to one already existing service.

In yet another embodiment, the placement constraints are obtained from an inventory storing the service constraints associated with one or more of the already existing service.

In yet another embodiment, the entry information further comprises one or more service constraints describing requirements for a specific aspect of the service, and the placement constraints are obtained directly from the service constraints in the entry information.

In yet another embodiment, the placement constraints are obtained by overriding the service constraints associated with instances of the already existing services with the service constraints in the entry information.

In yet another embodiment, each software component comprises one or more connection points, and the service descriptor comprises interconnection to and between the plurality of software components, via the one or more connection points.

In yet another embodiment, at least two service instances share a common component by using said one or more connection points.

In yet another embodiment, the service descriptors of the at least two service instances comprise one or more same types of software components.

In yet another embodiment, the method further comprises converting the obtained static and dynamic information into infrastructure and cost information having a uniform format, wherein the placement optimization description is generated based on the one or more placement constraints, the infrastructure and cost information having the uniform format and the optimization criterium.

In yet another embodiment, the service placement request further comprises one or more resource constraints describing the use limitation of resources.

In yet another embodiment, the placement optimization description is further created based on the one or more resource constraints.

In yet another embodiment, the optimization criterium comprise a directive to minimize total cost for use of resources.

In yet another embodiment, the metrics are service metrics and resource metrics.

In yet another embodiment, the metrics are measured metrics, predicted metrics or simulated metrics.

According to another aspect, a system is provided for optimizing the placement of a plurality of software components for a cloud service in a cloud-computing network, wherein the cloud-computing network comprises a plurality of data centers having computing and storage capacities, the system comprises: an interface for receiving a service placement request from an external system, a first obtainer for obtaining an optimization criterium and one or more entries from the service placement request, wherein each entry is relating to a new service to be deployed or an already existing service, and each entry comprises entry information comprising a service descriptor identifier, wherein the service descriptor identifier is related to the new service to be deployed or the already existing service, a second obtainer for obtaining a service descriptor according to the service descriptor identifier, wherein the service descriptor comprises service properties of the new service to be deployed or the already existing service, the plurality of software components and interconnection between the plurality of software components, a data collector for obtaining static and dynamic information in the cloud-computing network based on the entry information, wherein the static and dynamic information comprises resource availability and metrics, a code generator for creating a placement optimization description for the placement of the software components onto at least one of the plurality of data centers based on one or more placement constraints, the obtained static and dynamic information and the optimization criterium, an optimization utility for computing optimal placement of the software components onto at least one of the plurality of data centers based on executing the placement optimization description, by matching and satisfying the placement constraints towards the static and dynamic information of the cloud computing network in combination with the optimization criterium, a model generator for generating a service deployment model based on the placement optimization computation result, and the interface is further adapted to provide the service deployment model to the external system.

In yet another embodiment, the system further comprises a converting unit adapted to convert the obtained static and dynamic information into infrastructure and cost information having a uniform format, and the code generator is adapted to generate the placement optimization description based on the one or more placement constraints, infrastructure and cost information having a uniform format and the optimization criterium.

According to another aspect, a computer program comprising instructions, which, when executed by at least one processing circuitry of a system of a data communication network, causes the system to perform the steps of the above method.

### Brief description of drawings

The invention is now described, by way of example, with reference to the accompanying drawings, in which:
Fig. 1 is an exemplary conceptual illustration of a telecom operator network topology.
Fig. 2 is a flow chart showing an example of a method for optimizing placement of software components of a cloud service onto data centers in a cloud-computing network.
Fig. 3 is an exemplary structure of a service placement request.
Fig. 4 is an exemplary overview of the relationship between the system, the external system and infrastructure.
Fig. 5 is an exemplary overview of the system.
Fig. 6 is some examples of how interconnected software components may be arranged to form different communication topology patterns for different cloud services.
Fig. 7 is an exemplary overview of two service instances sharing a single component instance via different connection points.
Fig. 8 is an exemplary explanation of constraints-optimization problem solution.

### Description of embodiments

In the following, a detailed description of particular embodiments of the present disclosure are described herein-below with reference to the accompanying drawings; however, the disclosed embodiments are shown merely as examples of the disclosure and may be embodied in various other forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriate detailed structure. Like reference numerals may refer to similar or identical elements throughout the description of the figures.

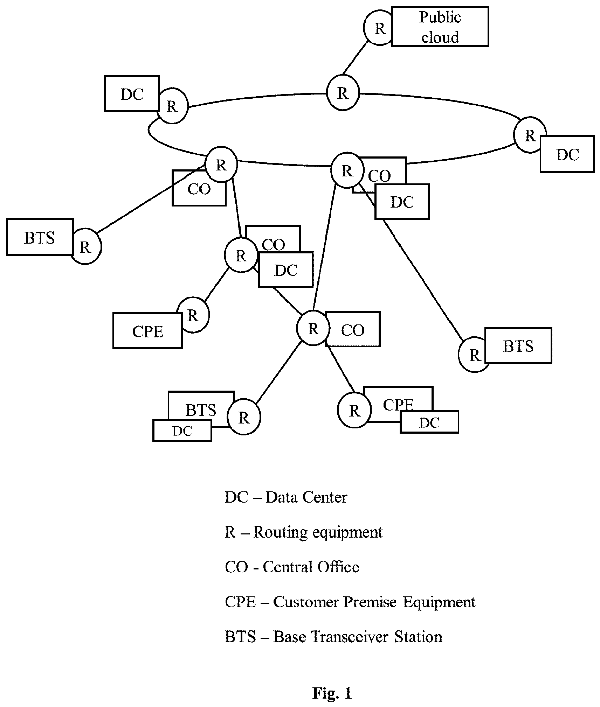

**Fig. 1** shows an exemplary conceptual illustration of a telecom operator network topology. A data center in Fig. 1 refers to a set of compute capacity that is treated as an atomic resource pool for placement of software components. It represents the smallest possible unit of compute. The actual amount of compute capacity can vary between instances of data centers ranging from single servers, or even micro controller devices, to large installations with abundant servers. The date centers shown in the topology can be accessed via different routers through different paths. The data centers can be distributed anywhere, from the public cloud down to small data centers in e.g. a customer premise equipment or a base transceiver station in a cellular network. Such type of topology enables the possibility of edge computing in the network.

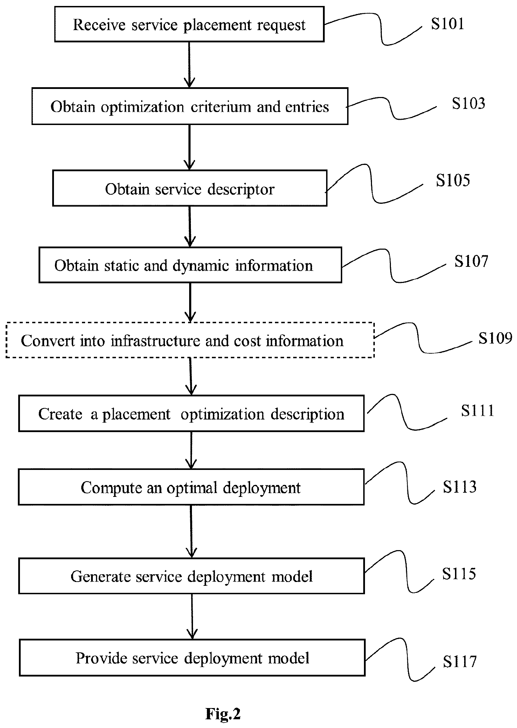

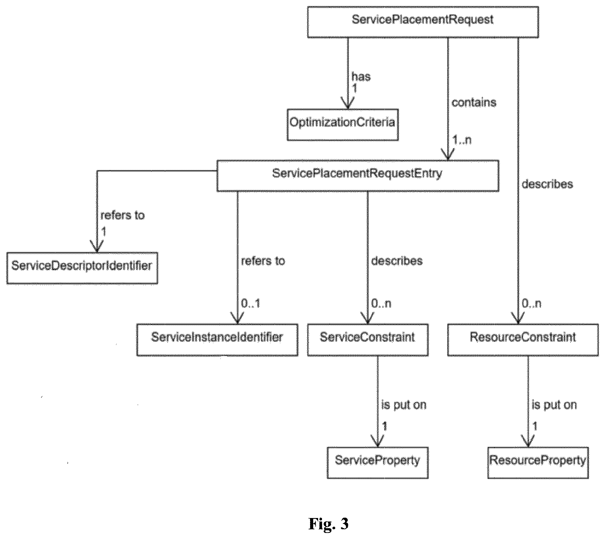

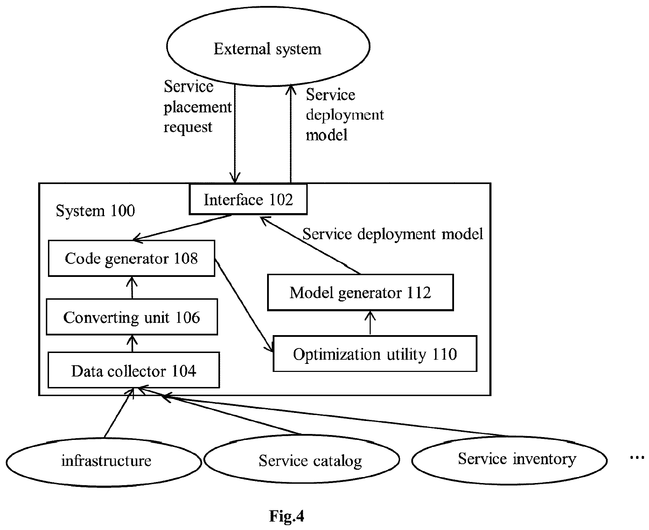

**Fig. 2** shows an example of a method for optimizing placement of software components of a cloud service onto data centers in a cloud-computing network with reference to Fig.3 and Fig.4

The method is performed in a component placement optimization system 100, which communicates with external systems. The external systems may be a stationary terminal, a mobile terminal, a server and a workstation etc. The system 100 also exchanges data with the cloud computing network, accessing metric and resource availability data from infrastructures in the network. The cloud computing network herein is an abstraction which comprise a delimited set of heterogenous data centers and the set of inter data center communication links providing interconnectivity between the set of data centers. The infrastructure herein can be interpreted broadly which may be data centers having computing and storage capacities, service catalog or service inventory etc. Inventory is a concept representing the functionality to create, read, update, and delete structured information describing for example a cloud service instance and its attributes for a specific could computing network environment. The method first receives S101 a service placement request from one of the external systems. A service placement request is an artifact, typically expressed in JavaScript Object Notation (JSON) or Yet Another Markup Language (YAML) format, whereby an external system request placement for a set of cloud services comprised of software components. The request may relate to new services or already existing services or both. A new service refers to an instance of a cloud service that will be deployed at the time of processing the service placement request. The software components of the new service will be placed in optimal places by this method. An existing service refers to an instance of a cloud service that is already deployed at the time of processing the service placement request. The software components of the existing service will be moved to another data center within the could computing network by this method, when necessary. This means the method may optimize the deployment of components on data centers for totally new services, or it may optimize the re-deployment of component instances on data centers for already existing services, or it may optimize both the deployment of components on data centers for new services and the re-deployment of component instances on data centers for already existing services.

In **Fig. 3****,** it is shown that the service placement request comprises an optimization criterium. The optimization criterium is a mandatory part of the service placement request and decides in which dimension the optimization of deployment of services should be made. The optimization criterium is the governing directive of the target for the placement optimization system. In some embodiments, the optimization criterium is to minimize cost, then the system will consider all costs for use of resources for all services included in the service placement request. These costs are for example a cost with a specified resource usage, or a cost for placing a component on a specified data center, or a cost for using a specified link, or a cost for using a specified bandwidth etc. In some other embodiments, the optimization criterium is to minimize latency, in which case the system will consider how to deploy the components for all services included in the service placement request such that the total latency for all services is minimized. However, cost and latency are only examples of the optimization criterium, they are not limitation of the optimization criterium. In some other embodiments, other factors such as to maximize central data center utilization, or to maximize edge data center utilization etc. can also be used as optimization criterium. The optimization criterium may be expressed in a specific language to allow for more elaborate directives to the placement optimization. An example of this would be to give the directive to minimize latency as much as possible on communication links between users and deployed cloud service instances but keep the cost for the deployed cloud service instances below a given threshold.

Further, the service placement request comprises one or more service placement request entries. Each entry comprises one service descriptor identifier and is relating to a service. The service may be one of the new services to be deployed and/or one of the already existing services.

The service descriptor identifier is a reference to a service descriptor, which means the service descriptor identifier can be used to access a service descriptor in a database or a catalog or in other suitable storage mechanisms. The service descriptor identifier is a unique identifier, at least within the scope of the data communication network and the cloud computing network environments. The service descriptor identifier uses some suitable format such as a GUID, or URI, or similar. The service descriptor is an artifact, or a set of artifacts, that describes a cloud service. The service descriptor describes the software components of the cloud service and the interconnections between the software components. The service descriptor also describes the connectivity between a software component and a user or an external system. The supported standardized service descriptor formats can be for example European Telecommunications Standards Institute (ETSI), Network Functions Virtualization (NFV), Network Services Descriptor (NSD)/ Virtualized Network Function Descriptor (VNFD), or Organization for the Advancement of Structured Information Standards Topology and Orchestration Specification for Cloud Applications (OASIS TOSCA). Any other proprietary format with sufficient information is also supported. Depending on the format the method may use a selected subset of the information contained within a service descriptor. The service descriptor further comprises service properties. Examples of service properties may be CPU, storage, network consumption; link latency and jitter requirements on communication links between software components or between a software component and a user/external system; whether an instance of the software component can simultaneously contribute to multiple cloud service instances, that is, if the instance of the software component can be share by multiple cloud services; consumption of virtual machine (VM) in data center etc. The service constraints are relating to service properties. To further explain the relationship between the service properties and the service constraints, an example will be given as following: The service properties for a component VM/vCPU consumption will result in the placement request optimization description which the data center metrics on available VMs/vCPUs are matched to the consumption properties. Further, the service constraints may be transport link latency between components, or transport link jitter between components, or data center selection made by the external system for a component, or required capacity of data center, or bandwidth for data transmission, or a specific capability required by a component such as access to GPU/accelerators etc. The infrastructure, such as the data centers, the links between the data centers etc. may have an infrastructure information about metrics and availability, the infrastructure information may include an available capacity of virtual machines, available capacity of virtual CPUs (vCPU), the link latency between data centers, link jitter between data centers etc.

Further in an embodiment shown in Fig.3, each service placement request entry comprises one service instance identifier. The service instance identifier is a unique identifier, at least within the scope of the data communication network and the cloud computing network environments, which identifies a deployed cloud service instance. The service instance identifier can be used to access information on a cloud service instance in a database, or an inventory, or in other suitable storage mechanisms. The placement optimization system uses service instance identifiers to collect information such as for example, which software component instances that contribute to a specific cloud service instance, run-time service metrics belonging to a cloud service instance and which constraints that were considered when the cloud service instance was created. The service instance identifier uses some suitable format such as a GUID, or URI, or similar. There may be two types of entries in the service placement request. The first type of entry is: the entry includes only one service descriptor identifier. The second type of entry is: the entry includes one service descriptor identifier and one service instance identifier. If the request comprises only the first type of entry, it indicates that the optimization of the component deployment is only relating to new services. If the request comprises both the first and the second types of entries, it indicates that the optimization of the component deployment is relating to both the new services and already existing services. If the request comprises only the second type of entries, it indicates that the optimization of the component deployment is only relating to the already existing services.

In another embodiment shown in Fig.3, each service placement request entry may comprise one or more service constraints. The service constraints describe requirements for a specific aspect of the service, as described above. The service constraints are relating to service properties. A service constraint makes it possible to effectively set the boundaries for an aspect of a cloud service where the aspect of the cloud service is represented by a service property. The service placement request may for each cloud service contain an arbitrary set of service constraints associated with a corresponding service property. Such a service constraint may, when applicable, override either relax or sharpen, an inherent requirement for a specific cloud service derived from the service descriptor. When an already deployed cloud service instance is referenced in the service placement request, it is also possible to override, either relax or sharpen, the present service constraint for the current deployment of the cloud service instance. The placement optimization system may also when processing a service descriptor identified in the service placement request create service constraints for selected service properties independent of service constraints present in the service placement request. A typical use is service constraints on service properties for resource consumption, for example the amount of VMs needed, in the cloud computing network. A service constraint, independent of its origin, will be part of the full set of placement constraints in a placement optimization description. By using service constraints, the placement optimization system allows for both design-time and run-time constraints, via service descriptors and service placement request, on cloud services to be managed and processed. Furthermore, the placement optimization system also allows constraints to be overridden. The service constraints contribute to the establishment of the solution search space and ensures cloud service delivery performance according to requirements.

A service property is an abstraction which describes the characteristics of a specific aspect of a cloud service. A service descriptor contains an arbitrary number of explicit service properties such as for example the VM consumption. The format and the range of properties in a service descriptor follows the specification for the service descriptor. A cloud service may also be associated with an arbitrary number of implicit service properties such as for example having one of the contributing software components associated with a specific data center in the cloud computing network. An external system interacting with the placement optimization system may express service constraints on service properties in the service placement request. The placement optimization system will use selected service properties to establish the solution search space.

Further in another embodiment shown in Fig.3, the service placement request may comprise one or more resource constraints, the resource constraints may be a limitation of resource usage in the cloud computing network. A resource constraint makes it possible to limit access to, or use of, a resource in the cloud computing network from the software components being subject to placement optimization. The service placement request may contain an arbitrary set of resource constraints associated with a corresponding resource property of the cloud computing network. Examples of resource properties are CPU, storage and network capacity. Resource properties can also represent capabilities in the cloud computing network such as for example that a given data center provide support for GPUs. A resource constraint will be part of the full set of placement constraints in a placement optimization description. The resource constraints contribute to the establishment of the solution search space and ensures cloud service delivery performance according to requirements. In addition, the resource constraints also allow the external system to, for example, reserve capacity in the cloud computing network, for reasons decided by the external system. In that respect it may harm the search for the optimal placement of the software components compared to a cloud computing network with unrestricted access to resources. When the resource constraints are comprised in the service placement request, the resource constraints complement the service constraints thus to form a total set of the placement constraints to be satisfied during the placement of the components. Placement constraint is the collection of all the relevant service constraints and resource constraints extracted from a service placement request, the set of referenced service descriptors and/or the set of service constraints in used for already deployed cloud service instances. Placement constraints are created in a code generator and represented in suitable language constructs. The placement constraints define the requirement dimension of the solution search space.

Returning to Fig. 2, the optimization criterium and one or more service placement request entries described above are obtained from the service placement request in Step S103. The service descriptor identifier in each entry is used to access the referred service descriptor in Step S105, in some embodiments, the entry further comprises a service instance identifier, the service instance identifier refers to an existing service instance and it is unique for each service instance. In some embodiments, the entry further comprises one or more service constraints, the service constraints are described as above and they are obtained as placement constraints to put requirements on the placement of the components in a certain aspect. In order to explain the definitions clearly, the constraints used during the placement of the components are called placement constraints, and the constraints comprised in the service placement request entry are called service constraints herein. The service constraints may refer to service properties in the service descriptor. In some embodiments, the placement constraints may be obtained directly from the service constraints in the entry information. In some other embodiments, the placement constraints may be obtained by overriding the service constraints associated with existing service instances with the service constraints in the entry information. In some other embodiments, the placement constraints are created from service properties obtained from the service descriptor of the new service to be deployed or the already existing service. In some embodiments, the set of placement constraints are the sum of all service and resource constraints that are collected.

Further referring to Fig.3, the service placement request may further describe one or more resource constraints limiting the usage of resources.

Returning to Fig. 2, to collect all necessary information required to generate optimized deployment of components, the method needs to interact with infrastructures in the cloud computing network, therefore in step S107 static and dynamic information in the cloud computing network is obtained based on the entry information. The static and dynamic information may be resource capacity, resource metrics or service instance metrics, such as link jitter/latency between data centers, or remaining virtual machine capacity in data centers, or remaining virtual CPU capacity in data centers etc. A resource metric is data on some characteristics belonging to a resource in the cloud computing network. A service metric is data on some characteristics belonging to a cloud service instance, or to the software components contributing to a cloud service instance. A resource/service metric may oftentimes be related to a service property and represent a single identifiable characteristic, but it may also represent a composite characteristic with multiple sources. The resource/service metrics data can be any combination of actual historical measured values, simulated metrics and predicted values, possibly produced by applying Machine Learning or other types of AI processing measured metrics. In some embodiments, the static and dynamic information is further converted into infrastructure and cost information in step **S109.** The infrastructure and cost information represents the composite information obtained by the placement optimization system on the resources comprised in the cloud computing network, how these resources are connected or related, their respective attributes, and what the cost of using these resources under different circumstances is. On a high abstraction level, the primary resources are the data centers and the set of inter data center communication links. Depending on the desired granularity the content of the infrastructure and cost information model may be further refined and described to desired level. The adaptability of the code-generated placement optimization description makes this type of refinement possible. The cost information describes cost in some abstract currency, it may represent cost in plain monetary terms which as an example could map to actual operational costs for using a resource, but it may also represent a fictional cost and thereby allowing for the external system to indirectly influence how the placement optimization system selects locations for the software components in the case of cost optimization. Furthermore, the cost information also allows for dynamic cost calculations so that for example using the last available resource is more expensive. The infrastructure and cost information has a uniform format. In some embodiments, the converted cost information is a function with arbitrary input parameters reflecting specific usage of a resource and/or specific run-time circumstances. Then a code generator will translate the infrastructure and cost information, the placement constraints and the optimization criterium into statements in the placement optimization source code thus to create a placement optimization description in **S111.** The placement optimization description is an artifact which is the output from the code generator in the placement optimization system. The placement optimization description is a representation of the problem of finding the optimal number and placement of software components in the cloud computing network, following the directive given in the service placement request. The placement optimization description is expressed as a constraint optimization problem using language constructs and language mechanism of a suitable executable domain specific language. By combining service placement request, service descriptors, service inventory, infrastructure and cost information etc., the placement optimization description is constructed so that all relevant aspects of the solution search space are considered. The solution search space is restricted by the capacity and capabilities of the cloud computing network. The software component characteristics including constraints and requirements on the cloud services derived from service placement request, service descriptors, and service inventory form a consumption dimension in the solution search space. A solver compatible with the placement optimization description can therefore match availability, capacity, and capabilities in the cloud computing network to the cloud services in the service placement request, satisfying the cloud services requirements and thereby securing service delivery performance with the optimal number and placement of software components following the optimization criterium in the service placement request. The code-generated placement optimization description is specifically tailored for the present circumstances. This quality makes it overcome limitations in competing, static sometimes imperative, placement algorithms which does not possess the adaptability and extensiveness inherent in the code-generated placement optimization description. The placement optimization description is described as a constrained optimization problem. In one embodiment, it is described using constraint modeling language of Minizinc. Other suitable modeling languages and tools may also be used. When the Minizinc is used herein, the Minizinc binary converts the placement optimization description from Minizinc language into solver independent notations and will run selected solvers. The selected solvers will compute an optimal placement of the software components based on the placement optimization description by matching and satisfying the placement constraints to the static and dynamic information in combination with the optimization criterium in **S113.** In **S115** a model generator will generate a service deployment model based on the optimal placement and provide the model to the external system in **S117.** The generation of service deployment model in S115 can be mechanical transformation into a notation and semantics known by the external system, i.e., adapt to the external system. It can also be other forms of generation. The service deployment model is a data structure which describes the mapping of the cloud services included the service placement request to the corresponding software component instances, including in which data centers in the cloud computing network these software components should be placed. The service deployment model therefore include specification on: which software components, if any that should be deployed and in which location; which already deployed software component instances, if any, that should be migrated to another location; which already deployed software component instances, if any, that should be terminated; and/or which cloud services, if any, that should use shared software components. The service deployment model is the translation of the result obtained from the execution of the placement optimization description expressed in a notation which the external system, directly, or after further post processing, can use in an orchestration system to place and/or to configure software component instances in the cloud computing network. The service deployment model uses identifiers and semantics in a notation that is known by the external system. Internally, the placement optimization system will use identifiers and semantics that are compatible with the domain specific language used for the placement optimization description and therefore a translation and adjustment of format is necessary. The advantage of the method is that it avoids fragmentation caused by cloud services being deployed at different points in time due to that this method can optimize multiple services in one service placement request and conclude that some already deployed software components should be migrated to other data centers.

In **Fig.4** an overview of relationship between the system **100** and external systems and infrastructures is shown. As described above, the service placement request is received from the external system via the interface **102.** The interface 102 provides the communication mechanisms between the system 100 and the external system requesting cloud service placement optimization. The interface is typically realized as a Hypertext Transfer Protocol (HTTP) based application programming interface (API) with payloads expressed in JSON and or YAML. As a supplement to the HTTP based API, a command line interface (CLI) tool is also typically provided. Such a CLI tool act as a frontend and is internally using the HTTP API. The information obtained via the entry in the service placement request as described above are sent to the code generator **108** for generation of the placement optimization description. To obtain the static and dynamic information, a data collector **104** collects corresponding resource metrics, service instance metrics and resource capacity etc. The data collector 104 can collect data on operational status such as fully-operational/failed/degraded, used and remaining capacity, metrics such as latency and jitter, cost for resource usage, etc. The data collector may produce information based on static configuration or dynamic information. The static and dynamic information can be obtained from any external systems, such as data center management systems, service catalog, service inventory, orchestrator systems, network management systems, software probes and so forth, to generate the deployment optimization description. The static information can be provided in a configuration file. The dynamic information can be collected by real-time collection of measurement data, by processing historical data in form of logs, or by forecasting future data using AI/ML processing. The data collected by the data collector 104 is transformed into information, in the dimensions chosen by the external system, expressed in a notation adjusted for use by subsequent functional blocks. A converting unit **106** converts the static and dynamic information into infrastructure and cost information having a uniform format and sends the infrastructure and cost information to the code generator **108.** The code generator 108 generates a placement optimization description based on the static and dynamic information/infrastructure and cost information, the optimization criterium and service constraints obtained from the entry. This input to the code generator 108 is basically a mix of abstract data, specific requirements, concrete metrics etc. The code generator 108 uses this largely unrelated and unassociated data from different sources and generates an executable program, denoted placement optimization description. The placement optimization description is expressed using language mechanism provided in a suitable domain specific language (DSL) and forms a constraints satisfaction and optimization program that efficiently defines a very specific search space, which can be processed by a solver supporting the DSL to find the optimal solution to the problem described in the program. The placement optimization description is used by an optimization utility **110** to generate the optimal placement, and further a service deployment model is generated by the model generator **112** based on the optimal placement, and then the service deployment model is provided to the external system via the interface 102. The optimization utility 110 is a functional block which is capable to run the placement optimization description generated by the code generator 108. It is typically realized by a readily available third-party solver for constraints and optimization problems. There can be plentiful solvers supporting the language used by the placement optimization description, each solver having different characteristics which makes it possible to construct a system 100 tailored for specific needs and specific environments. The model generator 112 takes the output from the optimization utility 110 and transform that output into an artifact denoted service deployment model. The service deployment model is expressed in a notation that is consumable by the external system requesting placement optimization. It is necessary to have the possibility to rename and restructure the input data in the code generator 108. One straightforward example of this is that input data may comply with some standard, like ETSI NFV, in which a concept like an identifier may have a larger set of allowed characters compared to what is allowed in the DSL generated from the code generator 108. Therefore, the code generator 108 may need to work with for example aliases, and this needs to be converted back to a notation that can be understood by the external system. These kinds of transformations are done in the model generator 112.

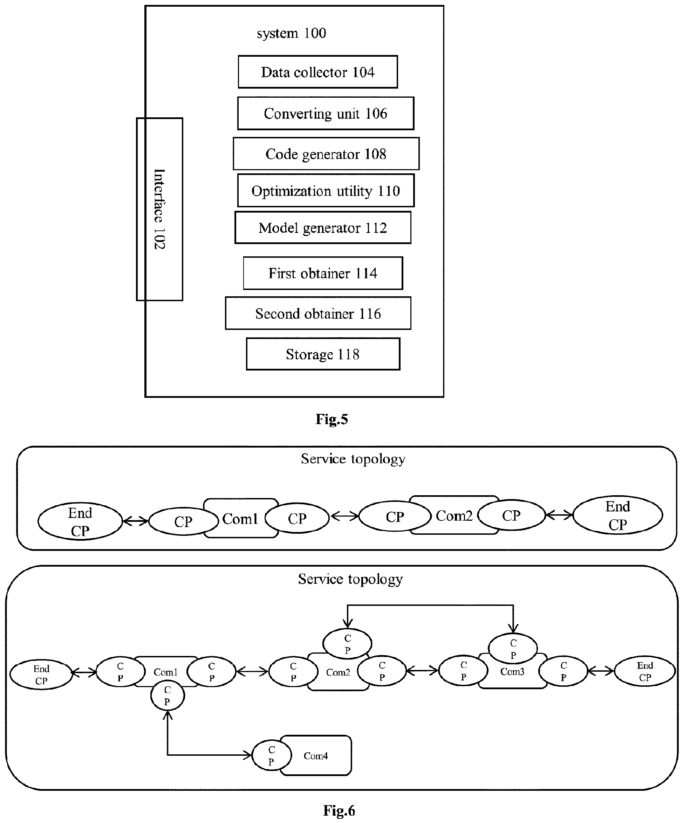

**Fig. 5** shows the detailed functional blocks in the system 100. To continue, the functional blocks which are not described in Fig. 4 will further be described herein. The system 100 further comprises a first obtainer **114** for obtaining the optimization criterium and the one or more entries from the service placement request. The first obtainer 114 receives and transform the declarative directive from the external system, expressed as a service placement request, into information, in the dimensions chosen by the external system, expressed into a notation adjusted for use by subsequent functional blocks. The system 100 further comprises a second obtainer **116** for obtaining a service descriptor according to the service descriptor identifier, wherein the service descriptor comprises service properties of the new service to be deployed or the already existing service, the plurality of software components and interconnections between the components. The second obtainer 116 will, for example from a catalog, via an API or via other suitable mechanisms, obtain and process service descriptors, expressed in any suitable format following the information provided by the first obtainer. The data collected from the service descriptors are transformed into information, in the dimensions chosen by the external system, expressed into a notation adjusted for use by subsequent functional blocks. The service descriptor may also describe the interconnections between shared component instances of service instances via one or more connection points (CP), which will be described below.

In **Fig. 6** different service topologies are shown. It can be seen that in each of the service topologies, each component comprises one or more connection points, the connection points are information element representing the virtual and/or physical interface that offers the network connections between instances of Components and a link, the virtual and/or physical interface is for example: a virtual port, a virtual network interface controller (NIC) address, a physical port, a physical NIC address or the endpoint of an IP VPN etc.. The connection point may help to describe important aspects in the placement optimization description so that connectivity between entities and their related characteristics and constraints can be described. For example, it may be used to:
(1)describe and associate properties to devices/services to which a service instance should connect;
(2) model inter service links, especially when more complex service topologies exist in the system, for example, there are multiple links between Component 2 and Component 3, or there are multiple links from Component 1, each link and each Connection Point may have separate characteristics and requirements.

There may be three different types of connection points according to the direction of the information. The first type is outbound connection points which only send out information. The second type is inbound connection points which only receive information. The third type is out-inbound connection points which means the connection point is bi-directional and both sends and receives information, thus it may help to model connections where connections have different characteristics and requirements.

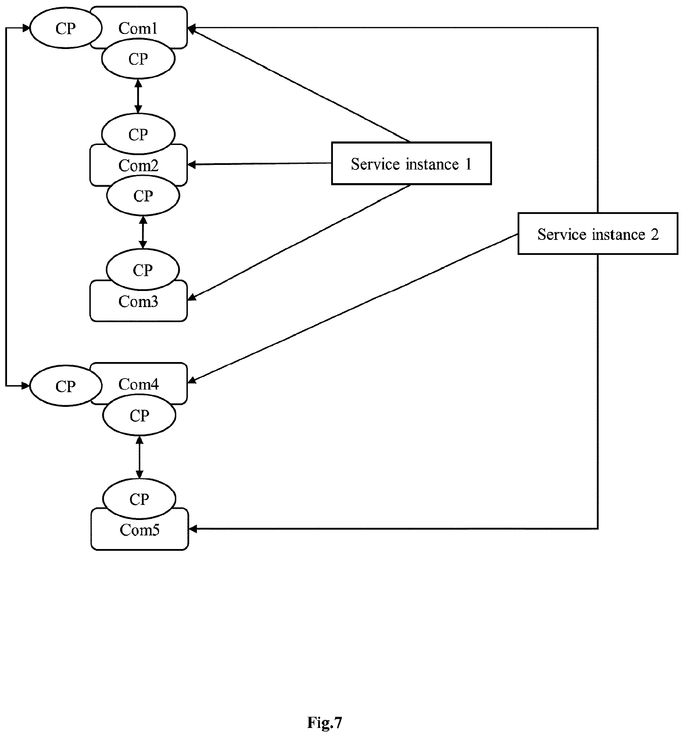

Further in Fig.7, it is shown that the component instances may be shared by different service instances. The different service instances may be of the same service type, that means, they have the same service descriptor. The different service instances may be of different types, that means, they have different service descriptors, but both service descriptors comprise a component of the same type. With the connection points described above, it is possible to describe the interconnection between shared component instances and other components via different connection points. To clarify the use of shared connection points, even if a component instance can be shared with corresponding increase in resource consumption, it does not mean that it must be shared. Whether a component instance is shared or not is subject to the optimal use of the component given constraints, resource utilization, cost of use and so forth.

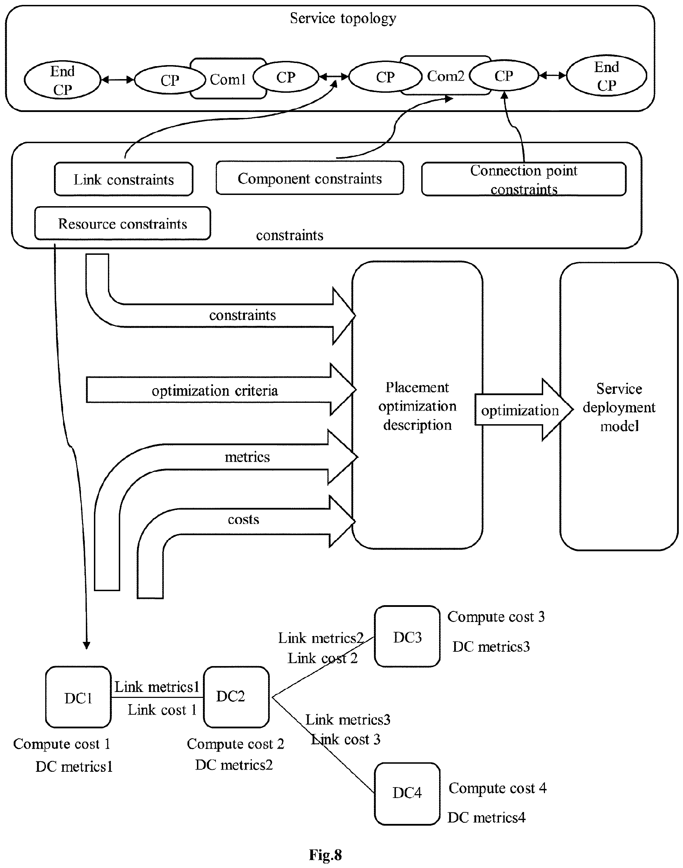

An exemplary overview of the constraints, metrics and optimization criterium together to generate the service deployment model is shown in **Fig.8****.** Note that this overview only contains one cloud service, whereas the invention supports optimization of multiple cloud services. The constraints may be constraints on links, components, connection points or data center resources. The metrics may be metrics of data centers and links, and the optimization criterium may be to minimize the cost for use of compute and links. The constraints, metrics and optimization criterium are not limited as described herein. They may comprise any of the constraints, metrics and optimization criterium as described in the whole application.

It will be appreciated that additional advantages and modifications will readily occur to those skilled in the art. Therefore, the disclosures presented herein and broader aspects thereof are not limited to the specific details and representative embodiments shown and described herein. Accordingly, many modifications, equivalents, and improvements may be included without departing from the spirit or scope of the general inventive concept as defined by the appended claims and their equivalents.

## Claims

1. A computer-implemented method performed by a system of a data communication network for optimizing placement of a plurality of software components of cloud services in a cloud computing network, wherein the cloud-computing network comprises a plurality of data centers having computing and storage capacities, the method comprising:
- receiving (S101) a service placement request from an external system,
- obtaining (S103) an optimization criterium and one or more entries from the service placement request, wherein each entry is relating to a new service to be deployed or an already existing service, and each entry comprises entry information comprising a service descriptor identifier, wherein the service descriptor identifier is related to the new service to be deployed or the already existing service,
- obtaining (S105) a service descriptor according to the service descriptor identifier, wherein the service descriptor comprises service properties of the new service to be deployed or the already existing service, the plurality of software components and interconnection between the plurality of software components,
- obtaining (S107) static and dynamic information in the cloud computing network based on the entry information, wherein the static and dynamic information comprises resource availability and metrics,
- creating (S111) a placement optimization description for the placement of the software components onto at least one of the plurality of data centers based on one or more placement constraints, the obtained static and dynamic information and the optimization criterium,
- computing(S113) an optimal placement of the software components onto at least one of the plurality of data centers based on the placement optimization description, by matching and satisfying the placement constraints to the static and dynamic information of the cloud computing network in combination with the optimization criterium,
- generating (S115) a service deployment model based on the placement optimization computation result, and
- providing (S117) the service deployment model to the external system.

2. The method according to claim 1, wherein the entry information of each entry further comprises one service instance identifier, the service instance identifier is relating to one already existing service.

3. The method according to claim 2, wherein the placement constraints are obtained from an inventory storing the service constraints associated with one or more of the already existing service.

4. The method according to any of claims 1-3, wherein the entry information further comprises one or more service constraints describing requirements for a specific aspect of the service, and the placement constraints are obtained directly from the service constraints in the entry information.

5. The method according to claim 4, the placement constraints are obtained by overriding the service constraints associated with instances of the already existing services with the service constraints in the entry information.

6. The method according to any of claims 1-5, wherein each software component comprises one or more connection points, and the service descriptor comprises interconnection to and between the plurality of software components, via the one or more connection points.

7. The method according to claim 6, wherein at least two service instances share a common component by using said one or more connection points.

8. The method according to claim 7, wherein the service descriptors of the at least two service instances comprise one or more same types of software components.

9. The method according to any of claims 1-8, further comprising:
- converting (S109) the obtained static and dynamic information into infrastructure and cost information having a uniform format,
wherein the placement optimization description is generated based on the one or more placement constraints, the infrastructure and cost information having the uniform format and the optimization criterium.

10. The method according to any of claims 1-9, wherein the service placement request further comprises one or more resource constraints describing the use limitation of resources.

11. The method according to claim 10, wherein the placement optimization description is further created based on the one or more resource constraints.

12. The method according to any of claims 1-11, wherein the optimization criterium comprises a directive to minimize total cost for use of resources.

13. The method according to any of claims 1-12, wherein the metrics are service metrics and resource metrics.

14. The method according to claim 13, wherein the metrics are measured metrics, predicted metrics or simulated metrics.

15. A system (100) operable in a data communication network for optimizing the placement of a plurality of software components for cloud services in a cloud computing network, wherein the cloud computing network comprises a plurality of data centers having computing and storage capacities, the system comprising:
- an interface (102) for receiving a service placement request from an external system,
- a first obtainer (114) for obtaining an optimization criterium and one or more entries from the service placement request, wherein each entry is relating to a new service to be deployed or an already existing service, and each entry comprises entry information comprising a service descriptor identifier, wherein the service descriptor identifier is related to the new service to be deployed or the already existing service,
- a second obtainer (116) for obtaining a service descriptor according to the service descriptor identifier, wherein the service descriptor comprises service properties of the new service to be deployed or the already existing service, the plurality of software components and interconnection between the plurality of software components,
- a data collector (104) for obtaining static and dynamic information in the cloud-computing network based on the entry information, wherein the static and dynamic information comprises resource availability and metrics,
- a code generator (108) for creating a placement optimization description for the placement of the software components onto at least one of the plurality of data centers based on one or more placement constraints, the obtained static and dynamic information and the optimization criterium,
- an optimization utility (110) for computing optimal placement of the software components onto at least one of the plurality of data centers based on executing the placement optimization description, by matching and satisfying the placement constraints towards the static and dynamic information of the cloud computing network in combination with the optimization criterium,
- a model generator (112) for generating a service deployment model based on the placement optimization computation result, and
the interface (102) is further adapted to provide the service deployment model to the external system.

16. The system according to claim 15, further comprising:
- a converting unit (106) adapted to convert the obtained static and dynamic information into infrastructure and cost information having a uniform format, and
the code generator (106) is adapted to generate the placement optimization description based on the one or more placement constraints, infrastructure and cost information having a uniform format and the optimization criterium.

17. A computer program comprising instructions, which, when executed by at least one processing circuitry of a system of a data communication network, causes the system to perform the claims according to any of claims 1-14.
